Europäisches Patentamt

European Patent Office

Office européen des brevets

(19)

(11) EP 0 690 824 B1

(12) EUROPÄISCHE PATENTSCHRIFT

(45) Veröffentlichungstag und Bekanntmachung des Hinweises auf die Patenterteilung:
29.01.1997 Patentblatt 1997/05

(21) Anmeldenummer: 94911891.3

(22) Anmeldetag: 15.03.1994

(51) Int Cl.$^6$: C02F 1/70, B01J 23/40, B01J 23/46

(86) Internationale Anmeldenummer:
PCT/EP94/00808

(87) Internationale Veröffentlichungsnummer:
WO 94/21564 (29.09.1994 Gazette 1994/22)

(54) **VERFAHREN ZUR VERRINGERUNG DES GEHALTS AN HALOGENHALTIGEN ORGANISCHEN VERBINDUNGEN IN WÄSSRIGEN SYSTEMEN**

PROCESS FOR REDUCING THE VOLUME OF HALOGENATED ORGANIC COMPOUNDS IN AQUEOUS SYSTEMS

PROCEDE POUR REDUIRE LA TENEUR EN COMPOSES ORGANIQUES HALOGENES DANS DES SYSTEMES AQUEUX

(84) Benannte Vertragsstaaten:
AT BE CH DE DK ES FR GB GR IE IT NL PT SE

(30) Priorität: 24.03.1993 DE 4309468

(43) Veröffentlichungstag der Anmeldung:
10.01.1996 Patentblatt 1996/02

(73) Patentinhaber: Henkel Kommanditgesellschaft auf Aktien
40191 Düsseldorf (DE)

(72) Erfinder: STALBERG, Theo
D-40789 Monheim (DE)

(56) Entgegenhaltungen:
EP-A- 0 563 669     US-A- 4 351 978
US-A- 4 909 947

## Beschreibung

### Gebiet der Erfindung

Die Erfindung betrifft ein Verfahren zur Verringerung des Gehalts an halogenhaltigen organischen Verbindungen in wäßrigen Systemen durch Reduktion mit Wasserstoff in Gegenwart eines Metall-Katalysators.

### Stand der Technik

AOX ist die Abkürzung für organische Halogenverbindungen, die an Aktivkohle adsorbierbar sind (adsorbierbare organische (X) Halogenverbindungen; X = Fluor, Chlor, Brom, Jod). Der AOX-Wert wird gemäß der DIN-Norm 38409 (Teil 14) ermittelt. Typische Beispiele für AOX-Verbindungen sind Methylenchlorid, Trichlorethylen, Perchlorethylen, Chloroform, Tetrachlorkohlenstoff, sowie PCB, HCH, DDT und Chlorparaffine.

Im Zuge eines zunehmenden Umweltbewußtsein gewinnt auch die Abwasserbehandlung wachsende Bedeutung. AOX ist dabei wegen seiner chronischen Humantoxizität im Abwasser unerwünscht. Darüber hinaus sind AOX-Verbindungen persistent und bio-akkumulierbar, was zu einer Anreicherung in der Umwelt führt. Der AOX-Gehalt von Abwässern ist deshalb in Deutschland durch gesetzgeberische Maßnahmen limitiert (vergl. E. Oswald; "Metalloberfläche" 1990, 44, 186-190).

In einem neueren Übersichtsartikel nennt E. Oswald (vergl. "Metalloberfläche" 1990, 44, 186-190) als drei besonders wichtige Verfahren zur chemischen Behandlung AOX-haltiger Abwässer:

a) eine Behandlung mit Ozon
b) eine Behandlung mit Ultraviolettbestrahlung und $H_2O_2$
c) eine oxidierende bzw. reduzierende elektrolytische Behandlung.

Es handelt sich dabei also im wesentlichen um oxidative Verfahren. Eine Variante der oxidativen Verfahren beschreibt J.K.Beattie: Organochlorverbindungen lassen sich in wäßrigem Milieu mit Rutheniumtetroxid zu Carbonat und Chlorid abbauen (vergl. Pure & Appl. Chem. 1990, 62, 1145-1146).

Nach R.A.Miller können organische Verbindungen wie 1,3,5-Trichlorbenzol in wäßrigem Milieu bei einem sauren pH-Wert, der nicht mehr als 4 betragen darf, oxidiert werden (vergl. US 4 212 735). Als Oxidans kommt z.B. Luft in Betracht. Als kennzeichnendes Cokatalysator-System lehrt Miller eine ternäre Kombination aus Nitrat Ionen, Bromid und/oder Iodid-Ionen sowie Übergangsmetallionen von mindestens einem Obergangsmetall mit zwei oder mehr Oxidationsstufen. Der bevorzugte pH-Bereich liegt unterhalb von 1, die bevorzugte Temperatur liegt oberhalb von 150 °C.

Darüber hinaus sind in der Literatur auch reduzierende Verfahren beschrieben. Nach K.H.Sweeny lassen sich persistente organische Verbindungen wie halogenierte Pestizide aus wäßrigen Systemen dadurch entfernen, daß man die Lösungen bei oder in der Nähe des Neutralpunktes durch eine Säule strömen läßt, die einen reduzierenden Metall-Katalysator wie Fe-Cu enthält.

E.G.Baker und L.J.Sealock beschreiben die katalytische Zersetzung chlorierter organischer Verbindungen in wäßriger Lösung (vergl. Report PNL-6491-2; Order No. DE88-009535; April 1988; das Dokument ist erhältlich über: NTIS - National Technical Information Service; United States Department of Commerce; vergl. auch das Zitat in Chem. Abstr. 110[12]: 101110f). Das Verfahren von Baker/Sealock besteht darin, die Abwässer bei Temperaturen von 300 bis 400 °C und hohen Drucken mit Übergangsmetall-Katalysatoren zu behandeln. Das Verfahren hat jedoch den Nachteil, daß es bezüglich Druck und Temperatur sehr drastische Bedingungen erfordert. Darüber hinaus bezeichnen die Autoren reduziertes Nickel als einzig effektiven Katalysator, wodurch eine allgemeine Anwendbarkeit anderer Übergangsmetallkatalysatoren stark infrage gestellt erscheint.

G. Dehoust, C. Ewen und R. Gensicke haben in einem Review halogenorganische Abfälle als Problemfälle der Abfallwirtschaft bezeichnet (vergl. "Müll und Abfall", 1991, 23, 283-294). Als eine Methode der Behandlung von Abfällen mit einem Gehalt an halogenorganischen Verbindungen nennen sie die Hydrierung. Das Prinzip dieser Methode besteht darin, daß das bei der Hydrierung organohalogenhaltiger Abfälle entstehende Chlor zu Chlorwasserstoff umgesetzt wird; entsprechend verhält es sich mit Brom-, Fluor- oder Jod-haltigen Abfällen. Die Reaktion kann schematisch wie folgt dargestellt werden:

$$R\text{-}Cl + H_2 \rightarrow HCl + R\text{-}H \qquad \text{(Schema 1)}$$

In Schema 1 bedeutet R-Cl eine organische Chlorverbindung, $H_2$ Wasserstoff, HCl Chlorwasserstoff und R-H einen Kohlenwasserstoff.

Bei der Hydrierung sind im wesentlichen zwei Varianten zu unterscheiden. Die thermische Hydrierung, auch Thermocracken genannt, wird bei Temperaturen zwischen 700 und 1.400 °C durchgeführt. Die sogenannte katalytische Hydrierung wird in Gegenwart fester Kontaktsubstanzen (Katalysatoren) durchgeführt. Der Artikel von G. Dehoust et al. gibt somit dem Fachmann einen Hinweis auf die grundsätzliche Möglichkeit, das Verfahren der katalytischen Hydrierung zur Behandlung halogenhaltiger organischer Abfälle heranzuziehen; in dem Artikel findet sich jedoch kein Hinweis darauf, inwiefern sich die katalytische Hydrierung auch zur Reduzierung des AOX-Gehaltes im AOX-haltigen Abwässern eignet. Analog verhält es sich mit allgemeinen Hinweisen, wie Sie etwa von T.Mathe et al. gegeben werden und wonach sich polychlorierte Halogenverbindungen in Gegenwart von Palladium-Katalysatoren hydrodechlorieren lassen (zitiert nach Chem. Abstr. 110 [10]: 81873b.

In neueren Untersuchungen haben S.Kovenklioglu et al. gefunden, daß sich mit Palladium auf Kohle als Katalysator in wäßrigen Systemen mit einem Gehalt an chlorierten Kohlenwasserstoffen wie 1,1,2-Trichlorethan eine Hydrodechlorierung durchführen läßt (vergl. AIChE Journal 1992, 38 (No. 7) 1003-1012). Die Autoren führten dabei ihr Katalysator-Screening bei Raumtemperatur und in der Nähe von atmosphärischem Druck in einem Schüttelautoklaven durch. Sie stellten fest, daß die Hydrodechlorierung beim System $Pd/Al_2O_3$ wesentlich schlechter verläuft als beim System Pd/C, weil das halogenhaltige Edukt von Aluminiumoxid schlechter adsorbiert wird. In diesem Zusammenhang weisen sie ausdrücklich darauf hin, daß die Anwesenheit von Kohle für den Erfolg der Hydrodechlorierung entscheidend ist (a.a.O. S.1003). Das Verfahren von S.Kovenklioglu et al. ist jedoch in zweierlei Hinsicht von Nachteil: zum einen wurden die Dehydrochlorierungen in ent-ionisiertem Wasser durchgeführt, was für die Praxis, d.h. die Verringerung des AOX-Gehalts eines Abwassers unrealistisch ist, zum anderen vermittel S.Kovenklioglu et al. dem Fachman die Lehre, daß die Anwesenheit von Kohle, d.h. eines den halogenhaltigen Kohlenwasserstoff adsorbierenden Trägers, entscheidend für den Erfolg ihres Verfahrens ist.

Schließlich lehren J.M.Harden und G.G.Ramsey die katalytische Hydrodehalogenierung mittels einer Mischung aus einer starken Base und Polyethylenglykol (vergl. Chem. Abstr. 107 [20]: 182791s).

**Beschreibung der Erfindung**

Die aus dem Stand der Technik bekannten Methoden erscheinen insgesamt sehr heterogen und sind überwiegend auf Einzelfalle ausgerichtet. Wegen der groBen Aktualität der Abwasserfrage besteht daher ein ständiger Bedarf an alternativen Verfahren zur Verringerung des AOX-Gehaltes von Abwässern.

Überraschenderweise wurde nun gefunden, daß sich der AOX-Gehalt entsprechender wäßriger Systeme sich durch Reduktion mit Wasserstoff in Gegenwart eines Metallionen-Katalysators und bei einem pH-Wert im Bereich von 7 bis 14 in dem erwünscht hohen Maß reduzieren läßt. Unter dem Begriff Metallionen-Katalysator ist im Sinne der vorliegenden Erfindung ein Katalysator zu verstehen, bei dem die Oxidationsstufe des Metalls von 0 verschieden ist.

Gegenstand der vorliegenden Erfindung ist dementsprechend ein Verfahren zur Verringerung des Gehalts an halogenhaltigen organischen Verbindungen (AOX) in wäßrigen Systemen durch Reduktion mit Wasserstoff in Gegenwart eines Metallionen-Katalysators, wobei

i) die Oxidationsstufe des Metalls des Metallionen-Katalysators von 0 verschieden ist und man die Reduktion
ii) bei einem pH-Wert im Bereich von 7 bis 14 und
iii) einer Katalysatorkonzentration von 0,001 bis 5 Gew.-% - bezogen auf das gesamte wäßrige System - durchführt.

Das erfindungsgemäße Verfahren unterliegt in bezug auf den AOX-Gehalt des Abwassers keinen besonderen Einschränkungen. Im Hinblick auf Abwässer, die für die Praxis relevant sein können, sei jedoch darauf hingewiesen, daß es sich insbesondere für alle wäßrigen Systeme mit einem AOX-Gehalt im Bereich von 0,1 bis 10.000 ppm eignet.

In einer bevorzugten Ausführungsform der vorliegenden Erfindung wird die Reduktion mit Wasserstoff, fortan auch als Hydrierung bezeichnet, in einem pH-Bereich von 9 bis 13 durchgeführt.

Die Wahl der Temperatur bei der Hydrierung unterliegt bei dem erfindungsgemäBen Verfahren an sich keinen besonderen Einschränkungen. Es ist jedoch bevorzugt, die Hydrierung im Temperaturbereich von 20 bis 140 °C durchzuführen. Dabei ist der Temperaturbereich von 60 bis 120 °C besonders bevorzugt.

Das Verfahren wird üblicherweise derart durchgeführt, daß man dem AOX-haltige Abwasser den Katalysator in einer Menge von 0,001 bis 5 Gew.-% - bezogen auf das gesamte wäßrige System - zusetzt, auf den gewünschten pH-Wert einstellt und anschließend hydriert. Die Hydrierung kann dabei batchweise durchgeführt werden. Es ist jedoch auch möglich, sie in einem kontinuierlich arbeitenden Reaktor mit Festbett-Katalysator durchzuführen. Die letztgenannte Ausführungsform der vorliegenden Erfindung ist insbesondere im Hinblick darauf vorzuziehen, daß das erfindungsgemäße Verfahren selbst bei sehr kurzen Reaktionszeiten, die in der Größenordnung von wenigen Minuten liegen, zu guten Ergebnissen, d.h. einer deutlichen Verringerung des AOX-Gehalts, führt. Dies stellt einen weiteren Vorteil des Verfahrens dar.

Das dem Metallionen-Katalysator zugrundeliegende Metall wird erfindungsgemäß bevorzugt ausgewählt aus der

EP 0 690 824 B1

8. Nebengruppe des Periodensystems der Elemente (Eisen, Kobalt, Nickel, Ruthenium, Rhodium, Palladium, Osmium, Iridium, Platin). Dabei ist Ruthenium ganz besonders bevorzugt.

Die folgenden Beispiele dienen der Erläuterung der Erfindung und sind nicht einschränkend zu verstehen.

**Beispiele**

**Herkunft des Abwassers**

62 g Sclareol und 1,9 g eines Anlagerungsproduktes von 20 Mol Ethylenoxid an Talgfettalkohol ("Dehydol TA 20"; Fa. Henkel/Düsseldorf) wurden in 350 ml Wasser vorgelegt und unter Rühren auf 80 °C erwärmt. Man ließ die Dispersion auf 35-40 °C abbkühlen, und setzte der Dispersion 0,83 g Rutheniumtrichlorid (25%-ige Lösung; Fa. Degussa) und 112,5 g einer 50%-igen wäßrigen KOH-Lösung zu. Anschließend dosierte man innerhalb von 3 Stunden unter Rühren 1862,5 g einer 13%-igen wäßrigen Natriumhypochloritlösung zu. Nach vollständiger NaOCl-Zugabe wurde über Nacht gerührt, wobei sich der Reaktionsansatz auf Raumtemperatur abkühlte.

Zur Aufarbeitung wurde die wäßrige Mischung zur Zerstörung des Oxidationsmittels (Natriumhypochlorit) mit 195 ml einer 20%-igen wäßrigen Lösung von Natriumsulfit versetzt, 15 Minuten bei 20 °C gerührt und anschließend durch Zufügen von 300 ml einer 40%-igen Schwefelsäure sauer gestellt. Schließlich wurde die organische Phase von der wäßrigen Phase abgetrennt.

Die so erhaltene wäßrige Phase wird im folgenden als **Abwasser I** bezeichnet. Sie enthält noch die aus der oben beschriebenen Sclareol-Oxidation herrührenden Anteile an Ruthenium. Der gemäß DIN 38 409 (Teil 14) ermittelte **AOX-Gehalt des Abwasser I betrug 74 ppm.**

**Beispiel 1 (B-1)**

Das (Ruthenium-haltige) Abwasser I wurde mit Alkali auf einen pH-Wert von 7,0 eingestellt und dann im Autoklaven bei 100 °C und 10 bar Wasserstoffdruck umgesetzt. Nach 120 Minuten betrug der AOX-Gehalt 2,4 ppm (vergl. Tabelle I).

**Beispiele 2 und 3 (B-2 und B-3)**

Beispiel 1 wurde wiederholt, wobei Veränderungen hinsichtlich pH-Wert bzw. Reaktionszeit vorgenommen wurden. Einzelheiten sind in Tabelle 2 zusammengestellt.

**Vergleichsbeispiel 1 (V-1)**

Beispiel 1 wurde wiederholt, jedoch bei einem pH-Wert von 3,0, d.h. einen pH-Wert auBerhalb des erfindungsgemäß beanspruchten Bereichs. Der AOX-Gehalt wurde nunmehr zu 5,1 ppm ermittelt. Die diesem Vergleich zugrundeliegenden Parameter sind ebenfalls Tabelle 1 zu entnehmen.

Tabelle 1:

| Behandlung von Abwasser I | | | | | |
|---|---|---|---|---|---|
| Bsp. | zugesetzter Katalysator[2] | pH-Wert | Temp. (°C) | Zeit (min) | AOX[1] (ppm) |
| B-1 | --- | 7,0 | 100 | 120 | 2,4 |
| B-2 | --- | 12,3 | 100 | 120 | 0,1 |
| B-3 | --- | 12,3 | 120 | 15 | 0,6 |
| V-1 | --- | 3,0 | 100 | 120 | 5,1 |

1) die AOX-Werte wurden nach DIN 38409 (Teil 14) ermittelt

2) wie aus der obenstehenden Versuchsbeschreibung hervorgeht, war der hier eingesetzte Katalysator aus der vorherigen Oxidation von Sclareol bereits im System vorhanden.

**Diskussion der Versuchsergebnisse**

Es wird deutlich, daß bei den erfindungsgemäßen Beispielen B-1 bis B-3 eine sehr weitgehende Reduktion des AOX-Gehaltes erreicht wurde. Aus der Gegenüberstellung der Versuche B-2 und V-1 geht insbesondere hervor, daß der pH-Wert ein kritischer Parameter ist: während bei einem pH-Wert von 3,0, d.h. im sauren Milieu, der AOX-Gehalt

4

EP 0 690 824 B1

auf einen Wert von 5,1 ppm reduziert wird, beträgt er bei einem pH-Wert von 12,5, d.h. im alkalischen, lediglich 0,1, d.h. er ist um einen Faktor 50 geringer.

**Patentansprüche**

1. Verfahren zur Verringerung des Gehalts an halogenhaltigen organischen Verbindungen (AOX) in wäßrigen Systemen durch Reduktion mit Wasserstoff in Gegenwart eines Metallionen-Katalysators, **dadurch gekennzeichnet**, daß

   i) die Oxidationsstufe des Metalls des Metallionen-Katalysators von 0 verschieden ist und man die Reduktion
   ii) bei einem pH-Wert im Bereich von 7 bis 14 und
   iii) einer Katalysatorkonzentration von 0,001 bis 5 Gew.-% - bezogen auf das gesamte wäßrige System - durchführt.

2. Verfahren nach Anspruch 1, wobei man Reduktion bei einem pH-Wert im Bereich von 9 bis 13 durchführt.

3. Verfahren nach Anspruch 1 oder 2, wobei der Gehalt des wäßrigen Systems an AOX-Verbindungen 0,1 bis 10.000 ppm beträgt.

4. Verfahren nach einem der Ansprüche 1 bis 3, wobei man die Reaktionstemperatur im Bereich von 20 bis 140 °C einstellt.

5. Verfahren nach einem der Ansprüche 1 bis 4, wobei man die Reduktion in einem kontinuierlich betriebenen Reaktor durchführt.

6. Verfahren nach einem der Ansprüche 1 bis 5, wobei das dem Metallionen-Katalysator zugrundeliegende Metall ausgewählt ist aus der 8. Nebengruppe des Periodensystems der Elemente.

7. Verfahren nach einem der Ansprüche 1 bis 6, wobei das dem Metallionen-Katalysator zugrundeliegende Metall Ruthenium ist.

**Claims**

1. A process for reducing the content of halogen-containing organic compounds (AOX) in aqueous systems by reduction with hydrogen in the presence of a metal ion catalyst, **characterized in that**

   i) the oxidation number of the metal of the metal ion catalyst is different from 0
   and in that the reduction is carried out
   ii) at a pH value in the range from 7 to 14 and
   iii) at a catalyst concentration of 0.001 to 5% by weight, based on the aqueous system as a whole.

2. A process as claimed in claim 1, characterized in that reduction is carried out at a pH value in the range from 9 to 13.

3. A process as claimed in claim 1 or 2, characterized in that the content of AOX compounds in the aqueous system is from 0.1 to 10,000 ppm.

4. A process as claimed in any of claims 1 to 3, characterized in that the reaction temperature is adjusted to a value of 20 to 140°C.

5. A process as claimed in any of claims 1 to 4, characterized in that the reduction is carried out in a continuous reactor.

6. A process as claimed in any of claims 1 to 5, characterized in that the metal on which the metal ion catalyst is based is selected from the 8th secondary group of the periodic system of elements.

7. A process as claimed in any of claims 1 to 6, characterized in that the metal on which the metal ion catalyst is based is ruthenium.

**Revendications**

1. Procédé de diminution de la teneur en composés organiques contenant des halogènes (AOX) dans des systèmes aqueux par réduction avec de l'hydrogène en présence d'un catalyseur à base d'ions métalliques, caractérisé en ce que

   i) le degré d'oxydation du métal du catalyseur à base d'ions métalliques est différent de 0 et en ce que l'on effectue la réduction,
   ii) à une valeur de pH dans la zone de 7 à 14, et
   iii) à une concentration en catalyseur allant de 0,001 à 5 % en poids, rapporté au système aqueux total.

2. Procédé selon la revendication 1,
   dans lequel
   on effectue une réduction à une valeur de pH dans la zone de 9 à 13.

3. Procédé selon la revendication 1 ou la revendication 2,
   dans lequel
   la teneur du système aqueux en composés AOX s'élève de 0,1 à 10 000 ppm.

4. Procédé selon l'une des revendications 1 à 3,
   dans lequel
   on ajuste la température de réaction dans la plage de 20 à 140°C.

5. Procédé selon l'une des revendications 1 à 4,
   dans lequel
   on opère la réduction dans un réacteur qui fonctionne en continu.

6. Procédé selon l'une des revendications 1 à 5,
   dans lequel
   le métal à la base du catalyseur en ions métalliques, est sélectionné parmi le huitième sous-groupe du système périodique des éléments.

7. Procédé selon l'une des revendications 1 à 6,
   dans lequel
   le métal à la base du catalyseur en ions métalliques, est le ruthénium.